# EUROPEAN PATENT APPLICATION

(11) **EP 1 970 597 A2**
(43) Date of publication of application: **17.09.2008**
(21) Application number: 08152654.3
(22) Date of filing: 12.03.2008
(51) Int. Cl.: F16H 9/14

(54) **Power unit for industrial machines and industrial machine using said power unit**

(30) Priority: 12.03.2007 IT VI20070070
(71) Applicant: Revelin Evaristo & Figli SNC, 36033 Isola Vicentina (VI) (IT)
(72) Inventor: Revelin, Diego, 36033, Isola Vicentina (VI) (IT)
(74) Representative: Bonini, Ercole

(57) **Abstract**

Power unit (1) for industrial machines (O) of the type comprising: one motor (2) and one pulley (3) splined to the shaft (4) of the motor (2), operatively connected to the components (5) of the industrial machine (0) via a driving belt (6); a supporting base (7) of the motor (2) arranged so that it rests on a bearing surface (8). The pulley (3) is of the expandable type and the supporting base (7) is associated with displacement means (10) suited to move it away from the bearing surface (8) during the stopping stage of the motor (2) in order to arrange the driving belt (6) on a reduced radius of the expandable pulley (3) when the motor (2) is at rest. Industrial machine (20) of the type comprising the power unit (1).

## Description

The present invention concerns a power unit for industrial machines particularly suited to be used in all the applications in which the electric power immediately available for powering the machines is not of the industrial type.

The present invention also refers to an industrial machine, like for example a plaster sprayer, using said power unit.

It is known that there are several types of industrial machines that support operators in the most varied types of processing.

Generally, said machines are equipped with motors, often electrically powered, for moving their components.

It is also known that often, to carry out their functions, industrial machines are subjected to considerable mechanical stresses that make it necessary to equip them with properly sized motors.

It is obvious that, consequently, at some moments during processing the electric power absorbed by the known industrial machines may be particularly high.

This does not constitute a problem if the industrial machines are used in industrial sheds or building sites where industrial electric systems are generally available, that is, systems capable of supplying an electric voltage of 380 V and electric power values in the order of dozens of kilowatts, while it represents a drawback if the machines must be used in houses or in any case in civil buildings.

In these last cases, in fact, differently from what happens in industrial environments, power is usually supplied with a voltage of 110/220 V and power values are limited to 3-5 kW.

Therefore, these values are often insufficient for the use of industrial machines of known type.

In this regard, a clear example is provided by building sites, where operators often use industrial machines like plaster sprayers or other machines to carry out their work.

In the starting stage these machines absorb a high quantity of electric power from the electric network, due to the high mechanical effort required of the motors.

It is evident that these industrial machines cannot be used in environments where only the power supply ensured by the civil electric network is available, and therefore the operators carry out these operations manually, which requires much time and efforts and, therefore, involves higher processing costs.

In order to overcome the drawbacks described above, the operators usually request the electricity company to provide a special power supply of industrial type.

This request, however, involves an increase in the time and money required and therefore represents an additional burden when a building site must be opened.

The object of the present invention is to overcome the above-mentioned drawbacks that are typical of the known state of the art.

In particular, it is the object of the present invention to construct a power unit for industrial machines that does not need a power supply voltage of industrial type.

In fact, it is the object of the present invention to construct a power unit for industrial machines capable of moving the industrial machines themselves absorbing power values that are always under 3-5 kW.

Therefore, it is another object of the present invention to construct a power unit for industrial machines that is particularly suited to be powered with the normal 220 volt electric network used to supply power to houses.

The above mentioned objects are achieved by a power unit for industrial machines carried out according to the contents of the main claim.

Said power unit is of the type comprising:
- at least one motor provided with at least one first pulley splined to the shaft of said motor and operatively connected to the components of said industrial machine via a first driving belt;
- a supporting base of said motor arranged so that it rests on a bearing surface,
and is characterized in that said first pulley is of the expandable type and in that said supporting base is associated with displacement means suited to move it away from said bearing surface during the stopping stage of said motor, in order to arrange said driving belt on a reduced radius of said expandable pulley when said motor is at rest.

According to a preferred embodiment of the invention, the displacement means generally comprise an actuator that is preferably, but not necessarily constituted by a fluid-operated cylinder and in particular a compressed air cylinder.

For this reason, the power unit also comprises a compressor that is operatively connected to the fluid-operated cylinder in order to supply said compressed air. Advantageously, the operation of the displacement means during the stopping stage of the motor of the power unit makes it possible to move the supporting base on which the motor rests away from the bearing surface.

In this regard, the driving belt that connects the expandable pulley, splined to the motor, to the components of the industrial machine is subjected to such a traction that it forces the expandable pulley to enlarge, thus allowing the driving belt to be arranged on a reduced radius when the motor is at rest.

It is obvious, in fact, that an increase in the distance between the expandable pulley and the components must be compensated by a decrease in the radius of the expandable pulley itself, in order to avoid the breakage of the driving belt.

With the engine at rest, therefore, the driving belt is arranged, as already explained, on a reduced radius, thus achieving the result that, advantageously, the torque that the motor must successively apply to the pulley to set the industrial machine in motion is also reduced.

Since industrial machines generally need a great quantity of electric power during the starting stage for the motor pickup, the use of a power unit carried out according to the invention advantageously allows said electric power to be reduced upon starting the motor.

Furthermore, the use of a fluid-operated cylinder advantageously allows the displacement means of the power unit of the invention to be carried out in a simple manner, since only a compressor or a small pump are needed.

Furthermore, many industrial machines generally comprise a compressor unit or an oil pump so that, advantageously, the use of a fluid-operated cylinder makes it possible to further simplify the construction of the power unit that is the subject of the invention.

In this regard, an example of industrial machine is constituted by a plaster sprayer that comprises a compressor unit for spraying plaster onto walls with a spraying gun.

On the other hand, the use of an electric actuator, not excluded by the present invention, is particularly advantageous for the industrial machines that are not equipped with oil pumps or compressors.

The aforesaid objects and advantages, and others that will be described in greater detail below, are highlighted in the description of preferred embodiments of the invention, provided here as non-restrictive examples, with reference to the attached drawings, wherein:
- Figure 1 shows an axonometric view of the power unit for industrial machines that is the subject of the invention;
- Figure 2 shows a partially sectional axonometric view of an industrial machine using the power unit that is the subject of the invention;
- Figure 3 shows a detail of the industrial machine of Figure 2;
- Figure 4 shows a plaster sprayer in an operating stage;
- Figures 5a and 5b show an operating sequence of a detail of the plaster sprayer of Figure 4.

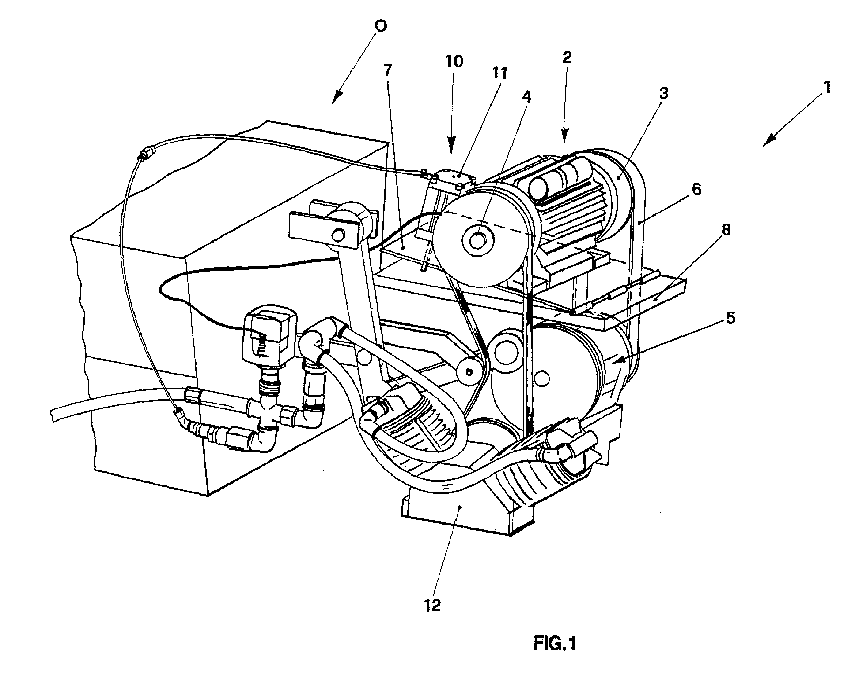

The power unit for industrial machines that is the subject of the invention is represented in Figure 1, where it is indicated as a whole by **1** and where it is possible to see that it comprises:
- at least one motor **2** comprising at least one pulley **3** splined to the shaft **4** of the motor **2** and operatively connected to the components **5** of the industrial machine **O** via a first driving belt **6;**
- a supporting base **7** of the motor **2** arranged so that it rests on a bearing surface **8**.

According to the invention, the pulley **3** is of the expandable type and furthermore the supporting base **7** is associated with displacement means **10** that move it away from the bearing surface **8** during the stopping stage of the motor **2** in order to arrange the driving belt **6** on a reduced radius of the expandable pulley **3** when the motor **2** is at rest.

According to the preferred embodiment of the invention described herein, the displacement means **10** comprise at least one actuator **11** interposed between the supporting base **7** and the bearing surface **8**.

In particular, the actuator **11** is generally constituted by a fluid-operated cylinder, preferably but not necessarily of the compressed air type.

In this case, the power unit **1** of the invention comprises at least one compressor **12** operatively connected to the fluid-operated cylinder **11** to supply compressed air.

Advantageously, the compressor **12** is mechanically connected to the motor **2** in order to set it moving and produce the above mentioned compressed air.

It is evident that the preferred embodiment of the invention described up to now is not intended to represent a limitation for different embodiments of the invention according to which, for example, the fluid is oil and the cylinder is connected to a pump.

Again, the actuator used may not be a fluid-operated cylinder but, for example, an electrically operated actuator of the type with gear wheels and racks.

As already mentioned, the invention also concerns an industrial machine using the power unit described up to now.

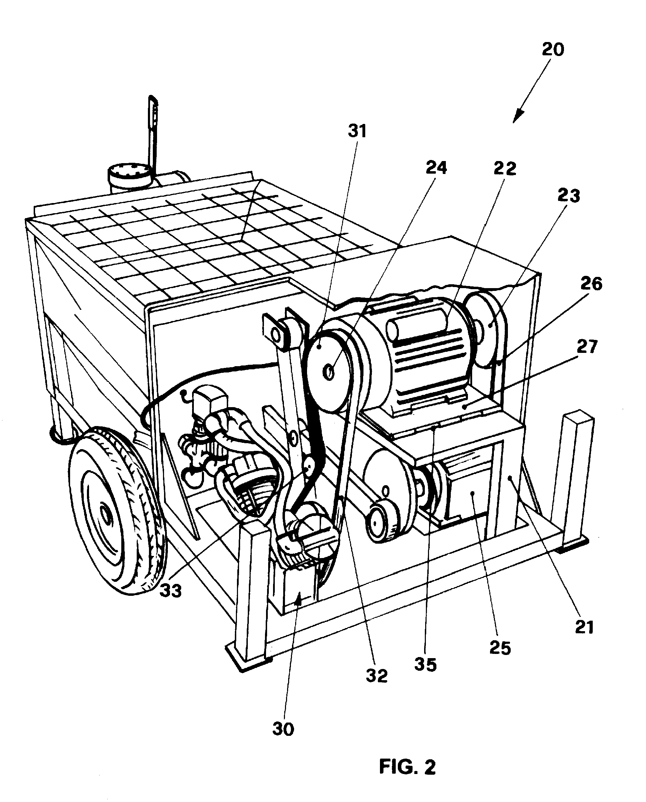

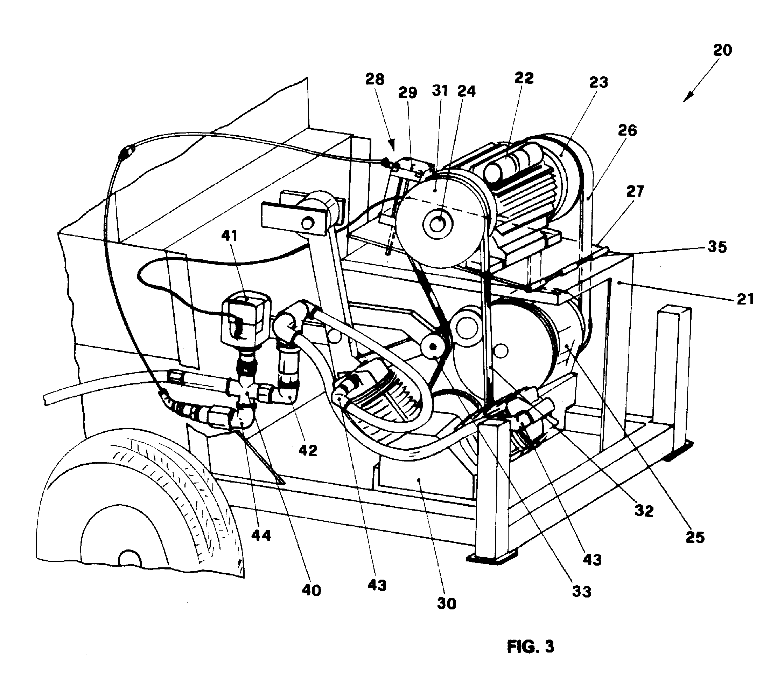

An example of such an industrial machine is provided in Figures 2 and 3, where it is indicated as a whole by **20** and where it is possible to observe that it comprises:
- a bearing structure **21**;
- at least one motor **22** comprising a first pulley **23** splined to the shaft **24** of the motor **22** and operatively connected to the components **25** of the industrial machine **20** via a first driving belt **26;**
- a supporting base **27** arranged so that it rests on the bearing structure **21** and on which the motor **22** rests.

According to the invention, the first pulley **23**, similarly to what has been said regarding the power unit just described, is of the expandable type and the supporting base **27** is associated with displacement means **28** suited to move the supporting base **27** away from the bearing structure **21** during the stopping stage of the motor **22** in order to arrange the driving belt **26** on a reduced radius of the expandable pulley **23** when the motor **22** is at rest.

Also in this case, according to the preferred embodiment of the invention described herein, the displacement means **28** comprise an actuator **29** interposed between the supporting base **27** and the bearing structure **21**.

Said actuator is preferably but not necessarily constituted by a fluid-operated cylinder and, in particular, generally of the compressed air type.

This is powered by a compressor **30** that is set rotating by the motor **22** for the generation of the compressed air.

In particular, at least a second pulley **31** is splined to the shaft **24** of the motor **22** and connected to the compressor **30** via a second driving belt **32**.

It can be noted that also for the industrial machine, as for the power unit previously described, construction variants can be carried out, where the fluid is oil or where the actuator is electrically operated.

Since the distance between the motor **22** and the compressor **30** can vary over time due to the action of the displacement means **28** mentioned above, the second driving belt **32** is kept tensioned via a tensioner **33** that, in the operating stage, will move together with the displacement means **28**.

Said displacement, for example, can be achieved using a spring that pushes the tensioner **33** against the second driving belt **32** when the supporting base **27** rests completely on the bearing structure **21** and that is compressed by the action of the belt **32** itself when this is tensioned due to the fact that the supporting base **27** is moved away from the bearing structure **21.**

In the detail of the preferred embodiment of the invention described herein, the supporting base **27** is polygonal in shape and has at least one side **35** hinged to the bearing structure **21** and the opposite side associated with the displacement means **28.**

As already explained, the industrial machines often include the compressor **30** and, in this case, the industrial machine **20** comprises at least one valve **40** controlled by a pressure switch **41**.

The valve **40** will thus include at least one inlet **42** connected to the delivery duct **43** of the compressor **30** and at least one first outlet **44** connected to the fluid-operated cylinder **29**.

The pressure switch **41,** besides being connected to the valve **40** in order to control it, is electrically connected also to the motor **22,** in order to switch it on and off.

The particular embodiment of the industrial machine **20** described up to now and using the power unit that is the subject of the invention is a plaster sprayer **50**, which however cannot be intended as a limitation to the scope of the invention, since the same description can be valid even if applied to different industrial machines.

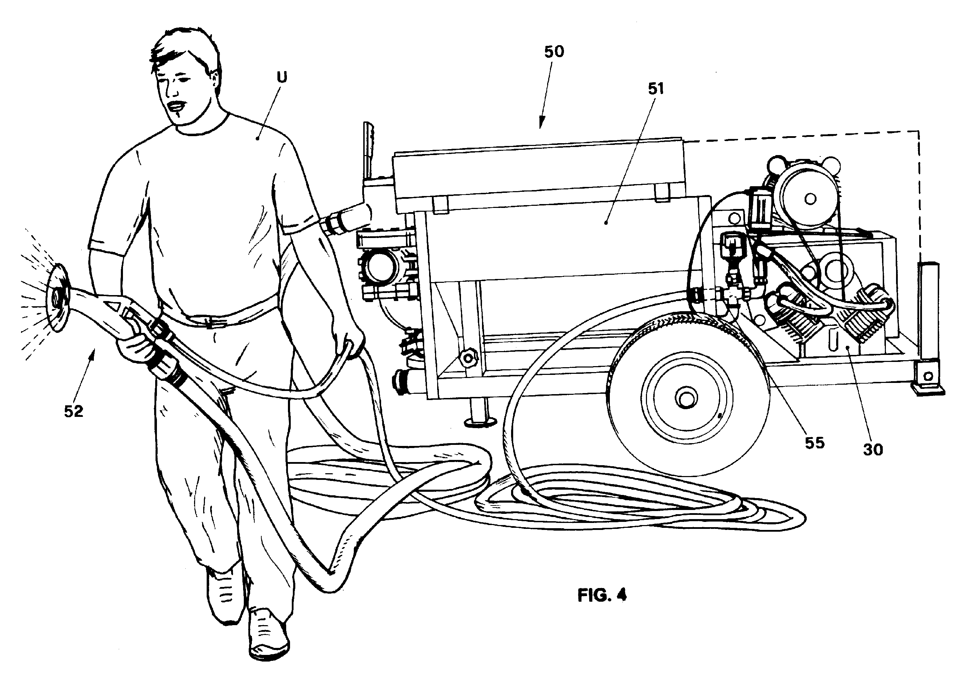

Said plaster sprayer, as can be observed in Figure 4, comprises a tank **51** that contains the plaster to be sprayed and a spraying gun **52** to be used by an operator **U** and connected to both the tank **51** and the compressor **30**.

In particular, the connection to the compressor **30** for the supply of air to the spraying gun **52** takes place through a pipe associated with a second outlet **55** of the valve **40** mentioned above.

The compressor **30**, therefore, supplies air to the inlet **42** of the valve **40** from which, via the controlling action of the pressure switch **41**, the air is sent to the spraying gun **52**, through the second outlet **55**, or to the fluid-operated cylinder **29**, through the first outlet **44**.

In practice, the user connects the plaster sprayer **50** that is the subject of the invention to the power supply network of the place where it is installed.

During normal usage of the machine, that is with the motor **22** running, the latter sets in motion the machine component **25** constituted by means for pumping plaster from the tank **51** to the spraying gun **52**.

The motor **22** sets in motion also the compressor 30 that supplies air to the spraying gun **52** to spray plaster onto the walls by exploiting the Venturi effect.

In this configuration, the pressure switch **41** acts on the valve **40** in such a way as to place the inlet **42** for the compressed air produced by the compressor **30** in communication with the second outlet **55** in order to allow the compressed air to reach the spraying gun **52**.

Once the plaster spraying operation has been completed, the hydraulic circuit between the spraying gun **52** and the compressor **30** is subjected to a sudden pressure increase that is recorded by the pressure switch **41**.

The latter consequently controls the stopping stage of the plaster sprayer **50.**

For this purpose, it controls the valve **40** in such a way as to close the second outlet **55** and open the first outlet **44**, so that the compressed air feeds the fluid-operated cylinder **29**.

The cylinder rod consequently extends, causing the supporting base **27** to move upwards, away from the bearing structure **21**.

It can be observed that this movement, away from the bearing structure **21**, takes place only on the side of the supporting base **27** on which the fluid-operated cylinder **29** is located due to the arc movement of the supporting base **27** with respect to the first side **35** hinged to the bearing structure **21**.

In such a situation, the second belt **32**, which sets the compressor **30** rotating, is tensioned and pushes the tensioner **33** backwards.

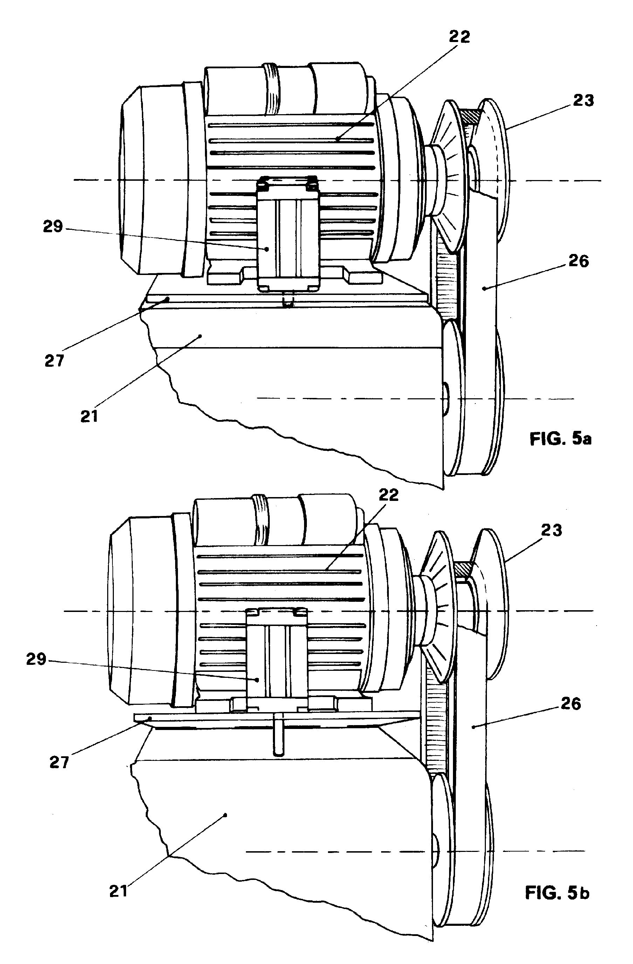

Furthermore, the first belt **26**, which is already in a configuration of maximum tension, acts on the expandable pulley **23** in such a way as to enlarge it as can be seen in the sequence of Figures 5a and 5b.

The first driving belt **26** is thus arranged on a reduced radius of the expandable pulley.

Successively, the pressure switch **41** stops the motor **22** and with it the compressor **30** and the machine components **25**.

As soon as the user **U** acts again on the spraying gun **52**, the pressure switch **41** records a sudden pressure drop in the hydraulic circuit that connects the second outlet **55** of the valve **40** to the spraying gun **52** itself.

The pressure switch **41** thus reacts controlling the relief of the pressure present on the hydraulic circuit that connects the first outlet **44** of the valve **40** to the fluid-operated cylinder **29** so that the latter makes the supporting base **27** of the motor **22** lower until it rests completely on the bearing structure **21** of the plaster sprayer **50.**

At the same time, the pressure switch **41** makes the valve **40** close the first outlet **44** and open the second outlet **55** to place the compressor **30** in direct communication with the spraying gun **52**.

Finally, the pressure switch **41** makes the motor **22** start again and the motor operates the components **25** of the plaster sprayer **50** and the compressor **30.**

Since the first driving belt **26**, that is, the belt connected to the machine components **25,** is arranged on a reduced radius of the expandable pulley **23,** the torque that the motor **22** must deliver is less than that required by equivalent industrial machines carried out according to the known art.

Therefore, the electric power absorbed by the plaster sprayer at the moment of maximum effort has considerably diminished and is generally less than 3-5 kW.

Consequently, the power unit that is the subject of the invention, and with it the industrial machines that use said power unit and in particular the plaster sprayer described above, all achieve the set objects.

In particular, the invention achieves the object to construct a power unit for industrial machines that does not need a power supply voltage of industrial type.

The power unit of the invention, in fact, absorbs electric powers that are always lower than 3-5 kW, even upon starting of the industrial machine.

Therefore, the invention also achieves the object to construct a power unit for industrial machines that is particularly suited to be powered with the normal 220 volt electric network used to supply power to houses.

During the construction stage, the power unit of the invention, as well as the industrial machines using said power unit, may undergo changes that, though not illustrated or described herein, shall nonetheless be covered by the present patent, provided that they come within the scope of the claims that follow.

Where technical features mentioned in any claim are followed by reference signs, those reference sings have been included for the sole purpose of increasing the intelligibility of the claims and accordingly such reference signs do not have any limiting effect on the interpretation of each element identified by way of example by such reference signs.

## Claims

1. Power unit (1) for industrial machines (O) of the type comprising:
- at least one motor (2) comprising at least one pulley (3) splined to the shaft (4) of said motor (2) and operatively connected to the components (5) of said industrial machine (O) via a driving belt (6);
- a supporting base (7) of said motor (2) arranged so that it rests on a bearing surface (8),
**characterized in that** said pulley (3) is of the expandable type and **in that** said supporting base (7) is associated with displacement means (10) suited to move it away from said bearing surface (8) during the stopping stage of said motor (2) in order to arrange said driving belt (6) on a reduced radius of said expandable pulley (3) when said motor (2) is at rest.

2. Power unit (1) according to claim 1), **characterized in that** said displacement means (10) comprise at least one actuator (11) interposed between said supporting base (7) and said bearing surface (8).

3. Power unit (1) according to claim 2), **characterized in that** said actuator (11) is a fluid-operated cylinder.

4. Power unit (1) according to claim 3), **characterized in that** said fluid-operated cylinder is a compressed air cylinder associated with a compressor (12).

5. Power unit according to claim 3), **characterized in that** said fluid-operated cylinder is an oil cylinder associated with a pump.

6. Power unit according to claim 2), **characterized in that** said actuator is of the electrically operated type.

7. Power unit according to claim 6), **characterized in that** said electric actuator comprises one or more gear wheels and one or more racks.

8. Industrial machine (20) particularly suited to be used in building sites, of the type comprising:
- a bearing structure (21);
- at least one motor (22) comprising at least one first pulley (23) splined to the shaft (24) of said motor (22) and operatively connected to the components (25) of said industrial machine (20) via a first driving belt (26);
- a supporting base (27) arranged so that it rests on said bearing structure (21) and on which said motor (22) rests,
**characterized in that** said first pulley (23) is of the expandable type and **in that** said supporting base (27) is associated with displacement means (28) suited to move it away from said bearing structure (21) during the stopping stage of said motor (22) in order to arrange said first driving belt (26) on a reduced radius of said expandable pulley (23) when said motor (22) is at rest.

9. Industrial machine (20) according to claim 8), **characterized in that** said displacement means (28) comprise at least one actuator (29) interposed between said supporting base (27) and said bearing structure (21).

10. Industrial machine (20) according to claim 9), **characterized in that** said actuator (29) is a fluid-operated cylinder.

11. Industrial machine (20) according to claim 10), **characterized in that** said fluid-operated cylinder is a compressed air cylinder associated with a compressor (30).

12. Industrial machine according to claim 10), **characterized in that** said fluid-operated cylinder is an oil cylinder associated with a pump.

13. Industrial machine according to claim 9), **characterized in that** said actuator is of the electrically operated type.

14. Industrial machine according to claim 13), **characterized in that** said electric actuator comprises one or more gear wheels and one or more racks.

15. Industrial machine (20) according to any of the claims from 9) to 14), **characterized in that** said supporting base (27) is polygonal in shape and has at least one side (35) hinged to said bearing structure (21) and the opposite side associated with said displacement means (28).

16. Industrial machine (20) according to claim 11), **characterized in that** at least one second pulley (31) is splined to said shaft (24) of said motor (22), said second pulley (31) being connected, through a second driving belt (32), to said compressor (30) for its operation.

17. Industrial machine (20) according to claim 11) or 16), **characterized in that** it comprises at least one valve (40) controlled by a pressure switch (41).

18. Industrial machine (20) according to claim 17), **characterized in that** said valve (40) is provided with at least one inlet (42) connected to the delivery duct (43) of said compressor (30) and at least one first outlet (44) connected to said fluid-operated cylinder (29).

19. Industrial machine (20) according to claim 17) or 18), **characterized in that** said pressure switch (41) is electrically connected also to said motor (22) to control it.

20. Industrial machine (20) according to any of the claims from 17) to 19), **characterized in that** it is a plaster sprayer (50).

21. Industrial machine (20) according to claim 20), **characterized in that** said valve (40) is provided with at least one second outlet (55) connected to the spraying gun (52) of said plaster sprayer (50).

22. Industrial machine (20) according to claim 21), **characterized in that** said spraying gun (52) is connected to a tank (51) belonging to said plaster sprayer (50) and containing the plaster to be sprayed.

23. Industrial machine (20) according to claim 22), **characterized in that** said machine components (25) are constituted by means for pumping said plaster from said tank (51) into said spraying gun (52).

24. Plaster sprayer (50) of the type comprising:
- a bearing structure (21);
- at least one tank (51) containing the plaster;
- at least one motor (22) comprising at least one first pulley (23) splined to the shaft (24) of said motor (22) and operatively connected, via a first driving belt (26), to means for pumping said plaster from said tank (51) into at least one spraying gun (52);
- at least one compressor (30) set rotating by said motor (22) and operatively connected to said spraying gun (52);
- a supporting base (27) arranged so that it rests on said bearing structure (21) and on which said motor (22) rests,
**characterized in that** said first pulley (23) is of the expandable type and **in that** said supporting base (27) is associated with displacement means (28) suited to move it away from said bearing structure (21) during the stopping stage of said motor (22) in order to arrange said first driving belt (26) on a reduced radius of said expandable pulley (23) when said motor (22) is at rest.
